Europäisches Patentamt

European Patent Office

Office européen des brevets

(11) Numéro de publication : **0 068 918**
**B1**

(12) **FASCICULE DE BREVET EUROPÉEN**

(45) Date de publication du fascicule du brevet :
26.03.86

(21) Numéro de dépôt : 82400942.7

(22) Date de dépôt : **19.05.82**

(51) Int. Cl.⁴ : **G 02 C   1/04**

(54) **Monture de lunettes.**

(30) Priorité : **29.05.81 FR 8110686**

(43) Date de publication de la demande :
**05.01.83 Bulletin 83/01**

(45) Mention de la délivrance du brevet :
**26.03.86 Bulletin 86/13**

(84) Etats contractants désignés :
**AT BE CH DE GB IT LI LU NL SE**

(56) Documents cités :
**GB-A-   775 293**
**US-A- 1 358 200**

(73) Titulaire : **Ayache, Charles**
**5 Square de Trocadéro**
**F-75016 Paris (FR)**

(72) Inventeur : **Ayache, Charles**
**5 Square de Trocadéro**
**F-75016 Paris (FR)**

(74) Mandataire : **CABINET BONNET-THIRION**
**95 Boulevard Beaumarchais**
**F-75003 Paris (FR)**

Jouve, 18, rue St-Denis, 75001 Paris, France

## Description

La présente invention se rapporte d'une manière générale aux montures de lunettes comprenant, suivant une technique connue décrite dans le document US-A-1 358 200, deux entourages filiformes emboîtables dans une gorge creusée sur le pourtour du verre, un pontet monobloc traversé par les entourages filiformes dans une zone nasale, les extrémités libres de chaque entourage étant fixées à un élément de raccordement apte à mettre en tension l'entourage.

Comme indiqué par le brevet ci-dessus, les verres de lunettes sont donc maintenus au moyen d'un, pontet et d'entourages filiformes mis en tension.

On observe que les dispositions enseignées ne sont pas dénuées d'inconvénients notamment en ce qui concerne la réalisation, et plus particulièrement la mise en tension des entourages, qui est peu pratique et demande du temps. En outre, avec de telles dispositions un changement de verre, par exemple suite à une détérioration, implique nécessairement le remplacement de l'entourage.

La présente invention a pour objet une monture de lunettes du genre concerné, qui remédie aux inconvénients succinctement énoncés ci-dessus, et qui, de plus, répond à une tendance qui est de fournir des paires de lunettes dans lesquelles la monture est la plus discrète et légère possible.

La monture de lunettes selon la présente invention, du genre comprenant deux entourages formés d'éléments filiformes souples, emboîtables sur des verres de lunettes aménagés à cet effet, un pontet s'étendant entre des parties adjacentes desdits entourages et comportant des passages recevant un tronçon desdits entourages pour les relier dans une zone nasale, ledit pontet comprenant une traverse prolongée par des branches s'étendant vers le bas formant plaquettes nasales, des moyens étant prévus dans une zone temporale pour le serrage de chaque entourage sur le verre correspondant, est caractérisée en ce que, en combinaison les moyens pour le serrage de chaque entourage dans une zone temporale comprennent un élément de raccordement formant chape, dont chaque joue est ancrée à une extrémité libre de l'entourage, ledit élément étant apte d'une part, à mettre en tension un entourage par rapprochement desdites joues et, partant, desdites extrémités libres, et, d'autre part, à constituer un charnon pour le raccordement, par axe d'une branche de lunettes, et en ce que, les plaquettes nasales comportent sur chacune de leurs faces internes d'appui sur le nez de l'utilisateur une gorge prolongeant les passages propre à assurer le guidage d'un tronçon d'entourage.

Chaque lien formant un entourage est donc ouvert dans une zone temporale et, pour la mise en tension des entourages ainsi réalisés, les extrémités libres desdits liens sont ancrées de toute manière appropriée à un élément de raccordement et de mise en tension, formé par les branches élastiquement déformables d'une chape, apte par ailleurs, à permettre de façon connue en soi, le raccordement des branches de lunettes.

On remarque immédiatement qu'une monture de lunettes selon l'invention comporte essentiellement deux liens reliés uniquement par un pontet, d'où il résulte d'une part, que les liens souples formant les entourages ne sont pratiquement pas apparents étant donné qu'ils se trouvent noyés pour leur grande partie dans une gorge périphérique ménagée à cet effet dans les verres, et d'autre part, qu'une telle monture ainsi réalisée présente une légèreté remarquable du fait que la monture est réduite à deux liens associés à un pontet, une telle monture assurant de façon efficace le maintien des verres de lunettes, tout en étant remarquablement discrète.

D'autres caractéristiques et avantages de l'invention ressortiront d'ailleurs de la description qui va suivre, donnée à titre d'exemple, en référence aux dessins annexés dans lesquels :

la figure 1 montre en perspective une monture de lunettes selon l'invention ;

la figure 2 est une vue, de face, et à plus grande échelle du pontet ;

la figure 3 est une vue en coupe selon la ligne III-III de la figure 2 ;

la figure 4 est une vue en coupe selon la ligne IV-IV indiquée à la figure 2 ;

la figure 5 est une vue en coupe selon la ligne V-V de la figure 2 ;

la figure 6 illustre en perspective un accessoire ;

la figure 7 est une vue suivant la flèche F de la figure 6 ;

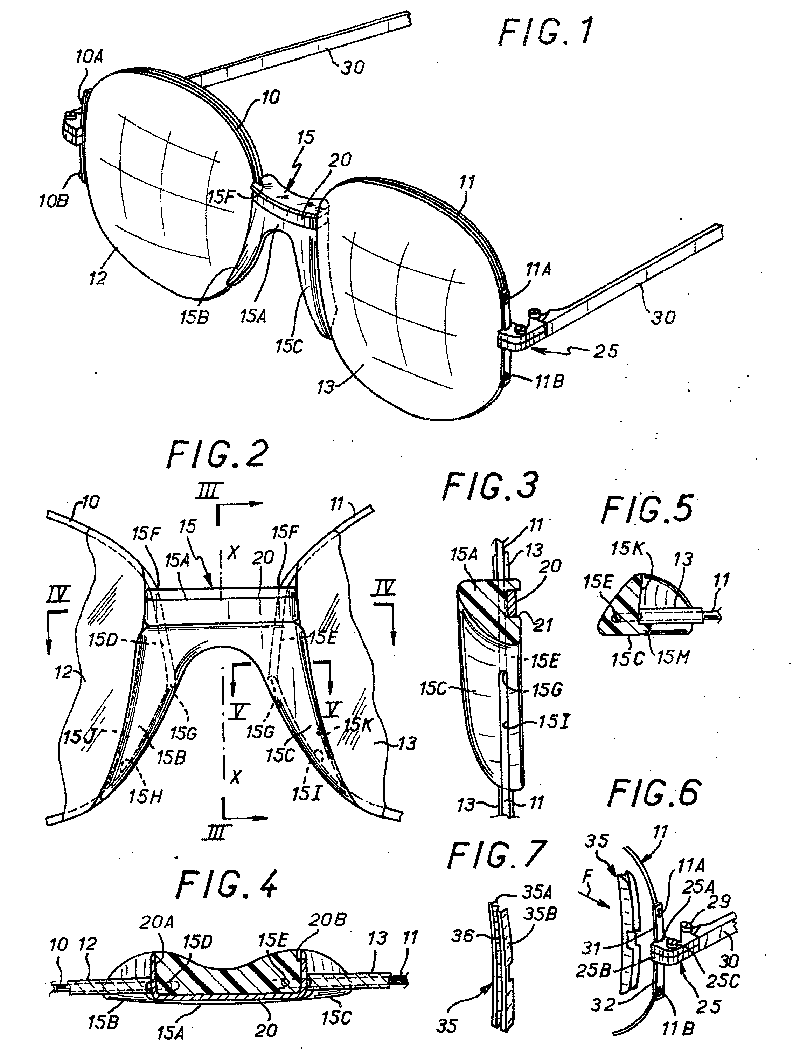

Suivant le mode de réalisation choisi et représenté aux figures 1 à 7, une monture de lunettes selon la présente invention comporte deux liens souples 10, 11, distincts, formant des entourages à des verres de lunettes 12, 13, ces liens souples sont « ouverts » chacun dans une zone temporale, et ils sont reliés uniquement par un pontet indiqué globalement en 15.

Le pontet 15 qui est avantageusement monobloc, en matière moulée, comporte une traverse 15A prolongée par des branches divergentes s'étendant vers le bas et constituant des plaquettes nasales 15B, 15C.

De part et d'autre d'un plan de symétrie médian X-X le pontet comporte un passage 15D, 15E ; chaque passage ainsi formé débouche d'une part, en 15F sur la face supérieure de la traverse 15A et ce, au voisinage immédiat d'un bord de verre de lunettes, et, d'autre part, en 15G sensiblement dans une zone de naissance des plaquettes nasales formées par les branches 15B, 15C.

Les branches 15B, 15C, comportent sur leurs faces respectives, destinées à être en appui sur le nez de l'utilisateur, une gorge 15H, 15I, ménagée dans le prolongement des passages précités ;

cette gorge a une première fonction qui est de permettre l'escamotage du lien, et une deuxième fonction qui est d'assurer le guidage du lien sur le tronçon concerné du pontet ; les deux liens 10 et 11 formant chacun un entourage sont ainsi réunis par le pontet 15 sur un tronçon s'étendant entre les orifices supérieurs 15F et les extrémités inférieures des plaquettes nasales.

On remarque que les passages 15D, 15E forment avec les gorges 15H, 15I, un angle obtus dont le sommet est situé sensiblement dans la zone de naissance des plaquettes nasales et qui, lors de la mise en tension des liens 10, 11, constitue un blocage des liens par rapport au pontet empêchant ainsi tout déplacement relatif entre liens et pontet.

Les orifices 15F formés par les passages 15D, 15E, débouchant au voisinage immédiat des côtés latéraux de la traverse, celle-ci est avantageusement équipée d'un élément de renforcement 20 serti ; un tel élément de renforcement 20, métallique, s'étend en façade de la traverse avec des prolongements 20A, 20B en appui sur les côtés latéraux de cette dernière.

De préférence, l'élément de renforcement précité est engagé dans une gorge 21 de section correspondante aménagée à cet effet dans la traverse 15A.

Par ailleurs, (figure 5 en particulier) les faces latérales 15J, 15K du pontet, sont au moins au niveau des plaquettes nasales adaptées à constituer une butée transversale à un tronçon périphérique d'un verre de lunettes. A cet effet, lesdites faces latérales comportent une nervure de façade 15M ; elles pourraient aussi comporter une rainure propre à recevoir un tronçon circonférentiel des verres de lunettes.

Ainsi qu'il est bien visible aux figures 1 et 6, les entourages constitués par les liens souples 10 et 11, sont ouverts dans une zone temporale, et ils ont leurs extrémités libres respectivement 10A, 10B ; 11A, 11B, ancrées de toute manière appropriée avec un élément de raccordement et de mise en tension indiqué globalement en 25 adapté à permettre le raccordement des extrémités des liens avec une branche 30 de lunettes. Cet élément comprend d'une part, une chape dont les joues 25A, 25B, élastiquement déformables peuvent être rapprochées ou relâchées au moyen d'une vis 25C, et, d'autre part, un charnon propre à recevoir par axe 29 et de manière bien connue, une branche 30 de lunettes.

Dans l'exemple représenté les joues 25A, 25B, formant chape, sont munies de tronçons de profilés 31, 32, s'étendant perpendiculairement auxdites joues ; ces tronçons de profilé sont adaptés à être emboîtés dans une partie correspondante de la gorge que comporte le verre, et aussi à constituer un ancrage aux extrémités 11A, 11B des liens souples.

La monture de lunettes suivant la présente invention, se présente donc, en attente de verres de lunettes, sous l'aspect de deux liens souples 10, 11 formant entourages, réunis uniquement par un pontet 15, tandis que du côté temporal l'élément 25 de raccordement et de mise en tension propre à chaque lien est en position d'attente (vis 25C desserrée et joues 25A, 25B de la chape écartées).

Après ajustement du verre de lunettes, et emboîtement du lien concerné dans la gorge périphérique que comporte le verre, la vis 25C est serrée en sorte que le lien correspondant est mis en tension. Cette mise en tension a pour effet d'assurer l'immobilisation de l'entourage considéré par rapport au pontet 15, et ce, notamment grâce à l'angle obtus formé au niveau du raccordement des passages 15D, 15E, et des gorges 15H, 15I.

La mise en tension du lien a aussi pour effet de plaquer fortement le pontet 15 contre un tronçon périphérique du verre de lunettes, tandis que, suivant une direction sensiblement diamétralement opposée l'élément de raccordement et de mise en tension des liens est également plaqué sur un tronçon périphérique correspondant du verre de lunettes, en sorte que le verre de lunettes est fermement maintenu par la combinaison des moyens énoncés ci-dessus.

Etant donné la souplesse des liens formant les entourages, on conçoit que ceux-ci peuvent épouser le contour d'un verre de lunettes quel que soit sa configuration, et ce, sans qu'il soit nécessaire de procéder à des ajustages longs et minutieux, seule la longueur des liens devra être prise en considération en fonction de la périphérie du verre de lunettes.

On observe ainsi qu'une monture selon la présente invention est nettement plus légère que les montures actuellement connues ; elle est de plus, particulièrement discrète en particulier du fait que les entourages des verres et le pontet qui peut être réalisé en toute matière convenable sont pratiquement invisibles.

Il convient en outre d'apprécier la simplicité de réalisation d'une telle monture de lunettes ainsi que la souplesse d'utilisation. En effet, avec un seul type de pontet, un seul type de lien, coupé à bonne longueur, et un seul type d'élément de raccordement, et de mise en tension on peut réaliser des montures qui s'adaptent parfaitement à la périphérie des verres de lunettes.

A ce sujet, si les verres de lunettes sont moins épais que les profilés 31, 32 situés dans la zone temporale, et faisant partie de l'élément de raccordement 25, on peut prévoir un adaptateur tel que représenté en 35 (figures 6 et 7) emboîtable sur les profilés en cause, un tel adaptateur comportant sur sa face libre une saignée 36 en V prévue pour recevoir un tronçon de périphérie du verre de lunettes.

On notera que l'adaptateur en question comporte avantageusement sur une face destinée à coopérer avec l'élément de raccordement 25, deux retours convergents 35A, 35B dans chacun desquels est ménagée une encoche centrale 35C. Un tel adaptateur peut donc être engagé sur l'élément de raccordement et de mise en tension 25, dans le cas où l'épaisseur des verres ne permet pas l'emboîtement des profilés 31, 32 dans la rainure qu'ils comportent, pour la réception du lien.

Bien entendu l'invention n'est pas limitée au mode de réalisation choisi et représenté donné à titre d'exemple, lequel est au contraire susceptible de diverses modifications sans pour autant sortir du cadre de l'invention.

**Revendications**

1. Monture de lunettes comprenant deux entourages (10, 11) formés d'éléments filiformes souples et emboîtables sur des verres de lunettes (12, 13) aménagés à cet effet, un pontet (15) s'étendant entre des parties adjacentes desdits entourages et comportant des passages (15D, 15E) recevant un tronçon desdits entourages pour les relier dans une zone nasale, ledit pontet comprenant une traverse prolongée par des branches s'étendant vers le bas formant plaquettes nasales (15B, 15C), des moyens étant prévus dans une zone temporale pour serrer chaque entourage sur le verre correspondant (12, 13), monture caractérisée en ce que en combinaison, les moyens pour serrer chaque entourage dans la zone temporale comprennent un élément de raccordement (25) formant chape dont chaque joue (25A, 25B) est ancrée à une extrémité libre de l'entourage, ledit élément étant apte d'une part, à mettre en tension l'entourage par rapprochement desdites joues et, partant, desdites extrémités libres, et, d'autre part, à constituer un charnon pour le raccordement, par axe (25C), d'une branche de lunettes, et en ce que, les plaquettes nasales (15B, 15C) comportent sur chacune de leurs faces internes d'appui sur le nez de l'utilisateur une gorge (15H, 15I) prolongeant les passages propres à assurer le guidage d'un tronçon d'entourage.

2. Monture de lunettes selon la revendication 1, caractérisée en ce que les passages (15D, 15E) forment, avec les gorges (15H, 15I), un angle obtus dont le sommet est situé dans la zone de naissance des plaquettes nasales.

3. Monture de lunettes selon l'une quelconque des revendications précédentes, caractérisée en ce que la traverse (15A) du pontet (15) comporte une gorge (21) ménagée en façade et sur les côtés latéraux propre à recevoir un élément de renforcement (20), avantageusement sous forme d'une barrette.

4. Monture de lunettes selon l'une quelconque des revendications précédentes, caractérisée en ce qu'il est prévu un accessoire (35) adaptable, côté temporal, sur l'élément de raccordement, en fonction de l'épaisseur du verre de lunettes.

**Claims**

1. A spectacles frame comprising two surrounds (10, 11) formed by flexible filiform elements which can be fitted on to spectacle lenses (12, 13) which are designed for that purpose, a bridge piece (15) extending between adjacent parts of said surrounds and comprising passages (15D, 15E) for receiving a portion of said surrounds to connect them in a nose region, said bridge piece comprising a transverse portion extended by limb portions extending downwardly and forming nose plates (15B), (15C), means being provided in a temporal region to clamp each surround around the corresponding lens (12, 13), the frame being characterised in that, in combination, the means for clamping each surround in the temporal region comprise a connecting element (25) forming a stirrup member of which each side portion (25A, 25B) is anchored to a free end of the surround, said element being capable on the one hand of tensioning the surround by moving said side portions and therefore said free ends towards each other and on the other hand forming a hinge knuckle for connecting a spectacles side piece by way of a pivot member (25C), and that the nose plates (15B, 15C) comprise, on each of their inward faces which bear against the nose of the wearer, a groove (15H, 15I) extending the passages for guiding a portion of the surround.

2. A spectacles frame according to claim 1 characterised in that the passages (15D, 15E) form, with the grooves (15H, 15I), an obtuse angle whose apex is disposed in the region where the nose plates begin.

3. A spectacles frame according to either one of the preceding claims characterised in that the transverse portion (15A) of the bridge piece (15) comprises a groove (21) disposed in the front face and on the lateral sides, for receiving a reinforcing element (20), advantageously in the form of a bar portion.

4. A spectacles frame according to any one of the preceding claims characterised in that there is provided an accessory (35) which can be fitted at the temporal side to the connecting element, in dependence on the thickness of the spectacles lens.

**Patentansprüche**

1. Brillengestell mit zwei Einfassungen (10, 11), die aus elastischen, fadenförmigen Elementen gebildet und an dafür ausgestaltenten Brillengläsern (12, 13) einfügbar sind, mit einer Nasenbrücke (15), die sich zwischen benachbarten Abschnitten der Einfassungen erstreckt und die mit Durchgängen (15D, 15E) ausgebildet ist zur Aufnahme eines Abschnitts der Einfassungen, um diese in einem Nasenbereich zu befestigen, wobei die Nasenbrücke einen Steg aufweist, der von Schenkeln verlängert wird, die sich nach unten hin erstrecken und Nasenplättchen (15B, 15C) bilden, wobei im Schläfenbereich eine Einrichtung vorgesehen ist zum Befestigen jeder Einfassung an dem jeweiligen Glas (12, 13), gekennzeichnet durch die Kombination der Merkmale, daß die Einrichtung zur Befestigung jeder Einfassung in dem Schläfenbereich ein Verbindungselement (25) aufweist, das eine Kappe bildet, von der jedes Seitenteil (25A, 25B) an einem freien Ende der Einfassung befestigt ist, daß das Verbindungselement einerseits die Einfassung durch Zusammenbringen der beiden Seitenstücke und damit der beiden freien Enden spannt, und andererseits mit der Achse (25C) ein Scharnier für die Anlenkung eines Brillenbügels bildet, und daß die Nasenplättchen (15B, 15C) auf ihren inneren Flächen, die zur Anlage an der Nase des Trägers gedacht sind, eine Kehle oder Nut (15H, 15I) aufweisen, die in Verlängerung der Durchgänge angeordnet und zur Führung eines Abschnitts der Einfassung geeignet sind.

2. Brillengestell nach Anspruch 1, dadurch gekennzeichnet, daß die Durchgänge (15D, 15E) mit den Nuten (15H, 15I) einen stumpfen Winkel bilden, dessen Spitze im Anfangsbereich der Nasenplättchen angeordnet ist.

3. Brillengestell nach einem der vorhergehenden Ansprüche, dadurch gekennzeichnet, daß der Steg (15A) der Nasenbrücke (15) eine Nut (21) aufweist, die an der Außenseite und an den Seiten ausgebildet ist zur Aufnahme eines Verstärkungselementes (20) vorzugsweise in Form eines Stabes.

4. Brillengestell nach einem der vorhergehenden Ansprüche, dadurch gekennzeichnet, daß ein Zubehörteil (35) vorgesehen ist, welches an der Schläfenseite an dem Verbindungselement abhängig von der Stärke der Brillengläser anbringbar ist.

0 068 918

FIG.1

FIG.2

FIG.3

FIG.5

FIG.4

FIG.7

FIG.6

1